Europäisches Patentamt

(19) European Patent Office (11) Publication number: **0 279 657**
**B1**
Office européen des brevets

(12) **EUROPEAN PATENT SPECIFICATION**

(45) Date of publication of the patent specification: (51) Int. Cl.⁵: **F16L 13/00,** F16L 25/00,
**08.08.90** F16B 4/00

(21) Application number: **88301338.5**

(22) Date of filing: **18.02.88**

(54) **Coupling device.**

(30) Priority: **19.02.87 US 12260** (73) Proprietor: **RAYCHEM CORPORATION (a Delaware corporation), 300 Constitution Drive, Menlo Park, California 94025(US)**

(43) Date of publication of application:
**24.08.88 Bulletin 88/34** (72) Inventor: **Kapgan, Michael, 1057 Shell Blvd. 10, Foster City California 94404(US)**

(45) Publication of the grant of the patent:
**08.08.90 Bulletin 90/32** (74) Representative: **Hall, Robert Leonard et al, Raychem Limited Intellectual Property Law Department Faraday Road Dorcan, Swindon, Wiltshire SN3 5HH(GB)**

(84) Designated Contracting States:
**AT BE CH DE ES FR GB IT LI NL SE**

(56) References cited:
**US-A- 4 469 357**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a device for coupling to an object such as a pipe or a rod. For example the device may be used to couple two or more pipes.

US-A 4 469 357 discloses a composite coupling for joining cylindrical substrates, which comprises a tubular heat-recoverable metallic compression sleeve and a tubular metallic insert disposed in the direction of recovery of the sleeve so that when the sleeve recovers, it deforms the insert so that it contacts the substrates to be joined. The insert may be provided with longitudinal terminal slots.

I have devised a coupling device which employs a collar of a dimensionally heat-recoverable polymeric material in conjunction with a tubular sleeve which has an end portion with a weakened wall, and which allows that portion of the sleeve to provide strain relief for the joint between the sleeve and a substrate.

The present invention therefore provides a device for coupling to an object, comprising:

(a) a tubular sleeve of which an end portion has a wall that is weakened to facilitate radial deformation thereof, and another portion whose wall is not so weakened;
(b) a shape memory alloy driver located to have a portion of the sleeve, other than that portion whose wall is weakened, positioned in the direction of its recovery; and
(c) a collar of a dimensionally heat-recoverable polymeric material located to have at least part of that portion of the sleeve whose wall is weakened positioned in the direction of its recovery.

The device of the invention has the advantage that it is able to provide relief from transverse strain imposed on the coupling between the pipes, by flexing of the weakened end portion of the sleeve. The provision of a collar around the weakened end portion ensures that that end portion is supported, and is therefore better able to provide strain relief. The use of a recoverable material for the collar has the advantage of ease of installation, as is known of recoverable materials in general. According to the present invention, however, particular recoverable materials are selected for particular components of the coupling device. A shape memory alloy driver is selected to deform the portion of the sleeve whose wall is not weakened so as in use to join the device to an object. The use of a shape memory alloy member allows high forces to be generated so as to make a fluid tight joint. A collar of polymeric material is used to support the portion of the sleeve which has the weakened wall. By appropriate selection of polymeric material, sufficient force can be generated by the collar to provide the necessary support. The use of a polymeric material has the significant advantage of reducing the cost of the coupling compared with couplings of the type disclosed in US-4469357 where only an element formed from a shape memory alloy is used to exert recovery forces. Also, the use of polymeric material allows the configuration of the collar to be adjusted to suit particular requirements more conveniently than is possible when the collar comprises a shape memory alloy. This is because of the relative ease with which polymeric components can be manufactured compared with metallic components, and is particularly advantageous for the support to be imparted to the weakened wall of the sleeve since it allows the amount of strain relief provided by the sleeve to the joint between the device and another object to be selected according to the requirements of a particular application. The provision of strain relief by the device of the invention is particularly advantageous when the sleeve bears, on one of its principal surfaces, at least one radial tooth which extends circumferentially about the longitudinal axis of the sleeve. Such a tooth is preferably provided on the internal surface of the sleeve, or on the portion of the sleeve whose wall is not weakened, or more especially both. Such a tooth may be relied on to enhance the tensile strength of the joint between the device and an object, or to enhance the seal between the device and the object, or both, by being forced into the surface of the object by the shape memory alloy driver when it recovers. When the sleeve bears such a tooth, strain imparted to the joint between the device and the object can be concentrated on the tooth. This can be undesirable since it can lead to a reduction in the tensile strength of the joint or a weakening of the seal between the device and the object or both. These undesirable effects are mitigated by the device of the present invention which provides relief against strain applied to a tooth on the sleeve of the device.

The wall of the sleeve may be weakened by the formation therein of one or more slots or elongate flats. A flat is an area of the wall of the sleeve in which the thickness has been reduced. Preferably the slots and flats are disposed parallel to the longitudinal axis of the sleeve. It is preferred that the wall is weakened so that when radial force is applied to the weakened portion of the sleeve, it is deformed symmetrically.

While the sleeve is generally referred to as being tubular, it should be understood that the word "tubular" is not limited to right cylindrical hollow sleeves but also includes other sleeves such as those which are Y-shaped, T-shaped and X-shaped.

Preferably, the sleeve has more than one end portion which has a wall that is weakened to facilitate radial deformation thereof. When the sleeve is a right cylindrical hollow sleeve, for example, it is preferred that the wall is weakened at both ends. When the sleeve has three or more ends, for example by being Y-shaped, T-shaped or X-shaped, one or more, preferably each, of the ends of the sleeve has a portion with a weakened wall. Such a sleeve, together with a collar of heat-recoverable polymeric material associated with each weakened wall end portion, can be used to provide a strain relieved coupling between as many objects as the sleeve has ends.

The recoverable components of the device may be expansible or shrinkable. Shrinkable components are preferred, in which case they will be arranged on the external principal surface of the sleeve so that when they recover, they deform the sleeve inwardly, into contact with an object positioned within it.

The object which may be coupled by means of the device of the invention may be solid or hollow when the recoverable components of the device are shrinkable. For example they may be pipes, rods, bars or cables. When the recoverable components of the device are expansible, the objects to be coupled will be hollow, so that the device can be positioned within it, and so that it recovers into contact with the internal surface when heated.

The device may be used to couple like objects together, or it may be used to couple different objects. For example, it may be used to terminate a pipe, for example to couple it to a pump or another piece of equipment. It may form a part of a screw fitting, serving to attach a circumferential flange (which can form part of the sleeve) to an object which is engaged by a threaded collar for attachment to an appropriately threaded mateable collar.

The driver may comprise one or more elements, each comprising shape memory alloy material. For simplicity of assembly, it is preferred to use a one piece driver having a configuration which is appropriate to the number of objects to be connected and to the configuration of the sleeve. It can in some circumstances be advantageous to use a plurality of ring-like driver elements, each serving to deform a respective portion of the sleeve. This is particularly advantageous when the sleeve is other than a right cylindrical hollow sleeve. Preferably, a ring driver is arranged to recover to compress the sleeve at a point at which a tooth is provided on one or both of its principal surfaces.

The alloy used to form the driver will be selected according to certain desired properties such as the recovery temperature, the conditions likely to be encountered in use, and the material and physical characteristics of the liner. Suitable shape memory alloys are disclosed in US-3174851, US-3351463, US-3753700, US-3783037, US-4144104 and EP-A-185452.

Suitable materials for the collar of the device will be selected according to certain desired properties such as the force desired to be exerted by the collar when it recovers, the recovery temperature, and the conditions likely to be encountered in use. Particularly preferred materials for the collar include high molecular weight polyethylenes having a molecular weight of at least about 150,000, for example from about 150,000 to about 600,000, preferably from 200,000 to about 400,000. A particularly preferred material for the collar comprises sintered ultra high molecular weight polyethylene (UHMWPE) having a molecular weight of at least about $1.5 \times 10^6$, preferably from about $2 \times 10^6$ to about $4 \times 10^6$, for example at least about $3 \times 10^6$. Such a material is disclosed in EP-A-153199 and conductive articles made from UHMWPE are disclosed in EP-A-157640.

The sleeve is preferably formed from a metal. It is particularly preferred that the metal is one which is gall-prone as discussed in US-4469357.

The device of the invention will now be described, by way of examples, with reference to the accompanying drawings, in which:

Figure 1 is an elevational view, partly in cross-section, of a prior art composite device, after recovery;

Figure 2 is a sectional view of a composite device according to the invention, after recovery; and

Figure 3 is a sectional view of another composite device according to the invention, after recovery.

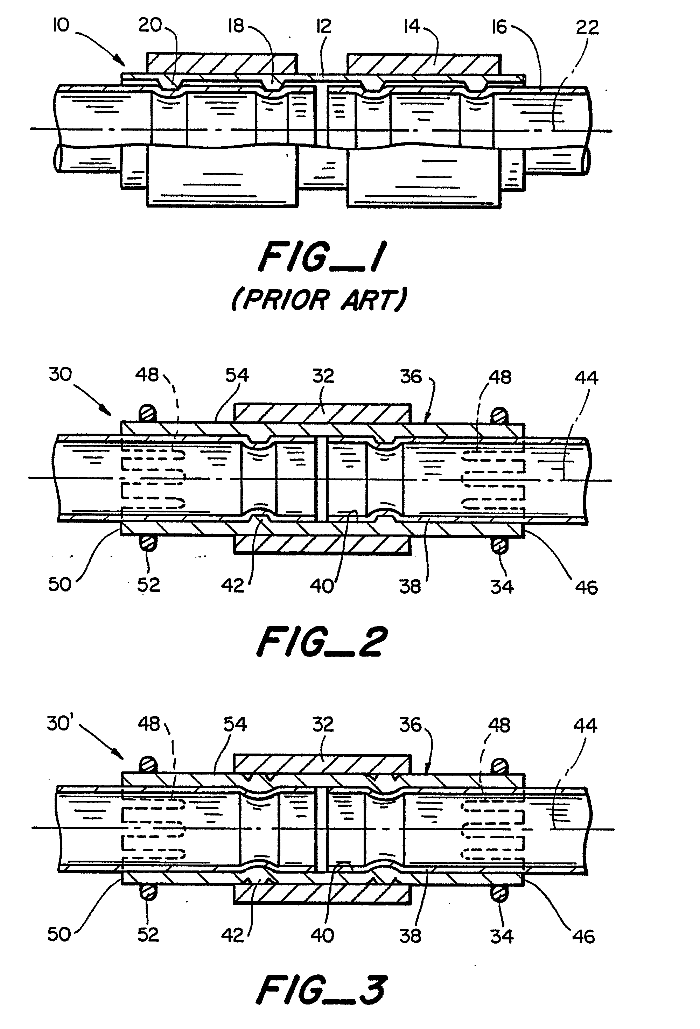

Referring to the drawings, Figure 1 shows a composite device of the type disclosed in US-4469357 which comprises a pair of heat-recoverable shape memory alloy drivers 14 and a tubular sleeve 12 which has a plurality of radial teeth 18,20 circumferentially formed about the longitudinal axis 22 of the sleeve.

In use, objects such as pipes 16 are inserted in the sleeve 12. The temperature of the drivers 14 is then raised above their transformation temperature to cause them to recover so that they compress the sleeve 12 radially and force the teeth 18,20 to bite into the external surface of the pipes 16. The teeth thus serve to retain the pipes within the sleeve, and to enhance the seal between the pipes and the sleeve.

Figures 2 and 3 show devices according to the present invention. Figure 2 shows a device 30 which comprises a shape memory alloy driver 32, collars 34,52 of a heat-recoverable polymeric material, and a tubular sleeve 36, the internal surface 40 of which bears a plurality of radial teeth 42 which extend circumferentially about its longitudinal axis 44.

The wall of the sleeve is weakened at each end portion 46,50 by the provision of slots 48. The collars 34,52 are positioned, one at each end of the sleeve, over each of the portions that has a weakened wall.

In use, pipes 38 are inserted into the sleeve 12, and the collars 34,52 and the driver 32 are heated above their respective transformation temperatures to cause them to recover, and to deform the sleeve into contact with the pipes.

The device 30' shown in Figure 3 differs from that shown in Figure 2 in that the radial teeth 42 are provided on the external surface 54 of the sleeve 36.

**Claims**

1. A device for coupling to an object (38), comprising:

(a) a tubular sleeve (36) of which an end portion (46,50) has a wall that is weakened to facilitate radial deformation thereof, and another portion whose wall is not so weakened;

(b) a shape memory alloy driver (32) located to have a portion of the sleeve, other than that portion whose wall is weakened, positioned in the direction of its recovery; and

(c) a collar (34,52) of a dimensionally heat-recoverable polymeric material located to have at least part of that portion of the sleeve whose wall is weakened positioned in the direction of its recovery.

2. A device as claimed in claim 1, in which the end portion (46,50) of the sleeve (36) whose wall is weakened has longitudinal extending slots (48) therein.

3. A device as claimed in claim 1 or claim 2, in which two end portions (46,50) of the sleeve (36) have a wall that is weakened to facilitate radial deformation.

4. A device as claimed in any one of claims 1 to 3, in which the sleeve (36) bears, on one of its principal surfaces, at least one radial tooth (42) which extends circumferentially about the longitudinal axis (44) of the sleeve.

5. A device as claimed in claim 4, in which the tooth (42) is provided on the internal surface (40) of the sleeve (36).

6. A device as claimed in claim 4 or claim 5, in which the tooth (42) is provided on the portion of the sleeve (36) whose wall is not weakened.

7. A device as claimed in any one of claims 4 to 6, in which there are a plurality of such teeth (42) provided in one of the principal surfaces of the sleeve (36).

8. A device as claimed in any one of claims 1 to 7, in which the polymeric material comprises an ultra high molecular weight polyethylene.

9. A device as claimed in any one of claims 1 to 8, in which the sleeve (36) is formed from a metal.

10. A device as claimed in claim 9, in which the metal is gall-prone.

## Patentansprüche

1. Einrichtung zum Ankuppeln an ein Objekt (38), umfassend:

a) eine rohrförmige Buchse (36), bei der ein Endbereich (46, 50) eine Wand hat, die mit einer Schwächung versehen ist, um ihre radiale Verformung zu erleichtern, und mit einem anderen Bereich, dessen Wand eine solche Schwächung nicht hat;

b) einen Treiber (32) aus einer Legierung mit Formerinnerungsvermögen, der so angeordnet ist, daß er einen Bereich der Buchse, und zwar einen anderen Bereich als den, dessen Wand mit Schwächung versehen ist, in der Richtung seiner Rückstellung positioniert hat; und

c) einen Bund (34, 52) aus einem dimensionsmäßig wärmerückstellbaren polymeren Material, das so angeordnet ist, daß es zumindest einen Teil des Bereiches der Buchse, deren Wand mit Schwächung versehen ist, in der Richtung seiner Rückstellung positioniert hat.

2. Einrichtung nach Anspruch 1, bei der der Endbereich (46, 50) der Buchse (36), deren Wand mit Schwächung versehen ist, darin ausgebildete, in Längsrichtung verlaufende Schlitze (48) aufweist.

3. Einrichtung nach Anspruch 1 oder Anspruch 2, bei der zwei Endbereiche (46, 50) der Buchse (36) eine Wand aufweisen, die mit Schwächung versehen ist, um die radiale Verformung zu erleichtern.

4. Einrichtung nach einem der Ansprüche 1 bis 3, bei der die Buchse (36) auf der einen ihrer Hauptflächen zumindest einen radialen Zahn (42) trägt, der sich in Umfangsrichtung um die Längsachse (44) der Buchse herum erstreckt.

5. Einrichtung nach Anspruch 4, bei der der Zahn (42) an der Innenoberfläche (40) der Buchse (36) vorgesehen ist.

6. Einrichtung nach Anspruch 4 oder Anspruch 5, bei der der Zahn (42) an dem Bereich der Buchse (36) vorgesehen ist, deren Wand nicht mit Schwächung versehen ist.

7. Einrichtung nach einem der Ansprüche 4 bis 6, bei der eine Vielzahl von solchen Zähnen (42) in der einen der Hauptflächen der Buchse (36) vorgesehen sind.

8. Einrichtung nach einem der Ansprüche 1 bis 7, bei der das polymere Material ein Polyethylen mit ultrahohem Molekulargewicht aufweist.

9. Einrichtung nach einem der Ansprüche 1 bis 8, wobei die Buchse (36) aus einem Metall gebildet ist.

10. Einrichtung nach Anspruch 9, wobei das Metall eine Tendenz zum Festsitz hat.

## Revendications

1. Dispositif de raccordement à un objet (38), comprenant:

a) un manchon tubulaire (36) dont une partie terminale (46, 50) possède une paroi qui est affaiblie pour faciliter sa déformation radiale et une autre partie dont la paroi n'est pas ainsi affaiblie ;

b) un élément d'entraînement (32) en alliage à mémoire de forme placé de manière à avoir une partie du manchon, autre que la partie dont la paroi est affaiblie, positionnée dans la direction de sa reprise dimensionnelle; et

c) un collier (34, 52) constitué d'une matière polymérique douée de reprise dimensionnelle à chaud, placé de manière à avoir au moins une fraction de la partie du manchon dont la paroi est affaiblie positionnée dans la direction de sa reprise dimensionnelle.

2. Dispositif suivant la revendication 1, dans lequel la partie terminale (46, 50) du manchon (36) dont la paroi est affaiblie porte des fentes (48) s'étendant longitudinalement.

3. Dispositif suivant la revendication 1 ou la revendication 2, dans lequel deux parties terminales (46, 50) du manchon (36) possèdent une paroi qui est affaiblie pour faciliter la déformation radiale.

4. Dispositif suivant l'une quelconque des revendications 1 à 3, dans lequel le manchon (36) porte, sur l'une de ses surfaces principales, au moins une dent radiale (42) qui s'étend circonférentiellement autour de l'axe longitudinal (44) du manchon.

5. Dispositif suivant la revendication 4, dans lequel la dent (42) est formée sur la surface intérieure (40) du manchon (36).

6. Dispositif suivant la revendication 4 ou la revendication 5, dans lequel la dent (42) est formée sur la partie du manchon (36) dont la paroi n'est pas affaiblie.

7. Dispositif suivant l'une quelconque des revendications 4 à 6, dans lequel il existe plusieurs de ces dents (42) formées dans l'une des surfaces principales du manchon (36).

8. Dispositif suivant l'une quelconque des revendications 1 à 7, dans lequel la matière polymérique consiste en un polyéthylène de poids moléculaire très élevé.

9. Dispositif suivant l'une quelconque des revendications 1 à 8, dans lequel le manchon (36) est formé d'un métal.

10. Dispositif suivant la revendication 9, dans lequel le métal est sensible au grippage.

FIG_1
(PRIOR ART)

FIG_2

FIG_3